# EUROPÄISCHE PATENTSCHRIFT

(11) **EP 1 567 404 B1**
(45) Veröffentlichungstag und Bekanntmachung des Hinweises auf die Patenterteilung: **08.10.2008**
(21) Anmeldenummer: 03812159.6
(22) Anmeldetag: 21.11.2003
(51) Int. Cl.: B62D 15/00

(54) **VERFAHREN ZUM LENKEN EINES RÜCKWÄRTS IN EINE PARKLÜCKE EINZUPARKENDEN FAHRZEUGS**
METHOD FOR STEERING A VEHICLE THAT IS TO BE REVERSED INTO A PARKING SPACE
PROCEDE DE DIRECTION D UN VEHICULE A GARER EN MARCHE ARRIERE SUR UNE PLACE DE STATIONNEMENT

(30) Priorität: 05.12.2002 DE 10256770
(43) Veröffentlichungstag der Anmeldung: 31.08.2005
(73) Patentinhaber: Bayerische Motoren Werke Aktiengesellschaft, 80809 München (DE)
(72) Erfinder: SPANNHEIMER, Helmut, 85630 Grasbrunn (DE); PRUCKNER, Alfred, 81545 München (DE); MEITINGER, Karl-Heinz, 83308 Trostberg (DE)
(86) Internationale Anmeldenummer: PCT/EP2003/013234
(87) Internationale Veröffentlichungsnummer: WO 2004/050458

(56) Entgegenhaltungen:
- DE-A- 3 844 340
- FR-A- 2 785 383
- US-A- 5 742 141

## Beschreibung

Die vorliegende Erfindung betrifft ein Verfahren gemäß dem Oberbegriff des Patentanspruches 1.

Aus der DE 199 40 007 ist ein Verfahren zum rückwärts Einparken eines Fahrzeuges in eine Parklücke bekannt. Ausgehend von einer Startstellung, in der das Fahrzeug schräg vorderhalb der Parklücke und parallel zur Längsrichtung der Parklücke steht, berechnet eine Elektronik eine Soll-Trajektorie, die aus mehreren Klothoiden- und Kreisbogenabschnitten besteht. Die Elektronik regelt die Lenkung so, dass nacheinander folgende Kurvenabschnitte durchfahren werden:
- ein erster Geradenabschnitt,
- ein erster Klothoidenabschnitt,
- ein erster Kreisbogenabschnitt,
- ein zweiter Klothoidenabschitt,
- ein zweiter Kreisbogenabschnitt,
- ein dritter Klothoidenabschitt.

Insgesamt werden also sechs Kurvenabschnitte durch Fahren, wobei es sich bei dem letzten Kurvenabschnitt, auf dem die Parkstellung erreicht wird, um einen Klothoidenabschnitt handelt. Während des Einparkvorganges wird die Ist-Trajektorie mit einer von der Elektronik berechneten Soll-Trajektorie verglichen. Abweichungen werden durch eine entsprechende Regelung des Lenkwinkels ausgeglichen. Explizit beschrieben ist in der DE 199 40 007 A1 lediglich ein Einparkvorgang, bei dem das zu parkende Fahrzeug in seiner Ausgangsstellung parallel zur Parklücke steht. Dies ist in der Praxis in den allermeisten Fällen nicht der Fall. Untersuchungen haben gezeigt, dass gerade die Position des Fahrzeugs zu Beginn des Einparkvorgangs sehr genau bekannt sein muss und bereits geringe "Schrägstellungen" des Fahrzeugs zu relativ großen Abweichungen von der gewünschten "Soll-Einparkstellung" führen können.

Aufgabe der Erfindung ist es, ein Verenfuchtes Verfahren zum Lenken eines rückwärts einzuparkenden Fahrzeuges anzugeben.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Lenkverfahren aus, bei dem ausgehend von einer Startstellung, in der das Fahrzeug schräg vorderhalb der Parklücke gebracht wird, bis zum Erreichen einer Parkstellung in der Parklücke nacheinander mehrere jeweils knickfrei ineinander übergehende Kurvenabschnitte rückwärts durchfahren werden. Der Kern der Erfindung besteht darin, dass es sich bei den in Fahrtrichtung gesehen letzten vier Kurvenabschnitten um folgende Kurventypen handelt:
- Beim ersten Kurvenabschnitt um einen Klothoidenabschnitt,
- Beim zweiten Kurvenabschnitt um einen Klothoidenabschnitt,
- beim dritten Kurvenabschnitt um einen Kreisbogenabschnitt,
- beim vierten Kurvenabschnitt um einen weiteren Klothoidenabschnitt und
- beim fünften Kurvenabschnitt um einen weiteren Kreisbogenabschnitt.

In der Startstellung, d. h. zu Beginn des Einparkvorgangs wird das Fahrzeug in einen beliebigen Winkel schräg zur Längsrichtung der Parklücke gebracht. Der zwischen der Startstellung und dem Beginn des zweiten Kurvenabschnitts liegende erste rückwärts zu durchfahrende Kurvenabschnitt ist durch eine andere geometrische Funktion beschrieben, als der zweite Kurvenabschnitt.

Mittels einer Messelektronik wird die Position und Ausrichtung des Fahrzeugs relativ zur Parklücke in der Ausgangsstellung erfasst. Mittels eines vorgegebenen mathematischen Fahrzeugmodells wird hierzu eine Soll-Trajektorie errechnet. Während des Einparkvorgangs wird dann die Lenkung des Fahrzeugs entsprechend der Soll-Trajektorie gesteuert. Wesentlich ist, dass es sich hierbei um eine echte Steuerung und nicht um eine Regelung der Lenkung handelt, was im Vergleich zu einer Steuerung mit erheblich mehr Aufwand verbunden wäre.

Der erste Kurvenabschnitt ist eine Klothoide. Wesentlich ist, dass der erste Kurvenabschnitt glatt, das heißt knickfrei in den zweiten Kurvenabschnitt übergeht. Grundsätzlich gilt, dass während des gesamten Einparkvorgangs zwischen der Startstellung und der Parkstellung die Lenkung so gesteuert wird, dass Lenkwinkeländerungen sprungfrei bzw. kontinuierlich erfolgen. Dies hat den Vorteil, dass das Fahrzeug während des Einparkvorgangs an den Übergängen zwischen den einzelnen Kurvenabschnitten nicht angehalten werden muss, sondern ohne anzuhalten von der Startstellung in die Parkstellung gefahren werden kann.

Ferner kann vorgesehen sein, dass die "Einparksteuerung" vom Fahrer nur dann aktiviert werden kann, wenn das Fahrzeugs still steht, wobei dann die momentane Fahrzeugposition und die Fahrzeugstellung relativ zur Parklücke von der elektronischen Einparksteuerung als Startstellung definiert wird. Vorzugsweise kann vorgesehen sein, dass das Fahrzeug zum Einparken vom Fahrer in Bewegung gesetzt werden muss und die Fahrzeuggeschwindigkeit während des gesamten Einparkvorganges durch den Fahrer vorgegeben werden muss. Aus Sicherheitsgründen kann vorgesehen sein, dass die vom Fahrer vorgegebene Geschwindigkeit gegebenenfalls auf eine vorgegebene Maximalgeschwindigkeit begrenzt wird.

Gemäß der Erfindung wird der von der Steuerelektronik für den Einparkvorgang einzusteuernde Lenkwinkel bezogen auf den rückwärts vom Fahrzeug zu fahrenden Weg ermittelt. Ein "wegbezogener Lenkwinkel" hat den Vorteil, dass die Lenkung unabhängig von der Fahrzeuggeschwindigkeit während des Einparkvorgangs gesteuert werden kann.

Ferner kann vorgesehen sein, dass das Fahrzeug während und am Ende des Einparkvorganges durch den Fahrer gebremst wird. Aus Sicherheitsgründen kann vorgesehen sein, dass während des gesamten Rückfahrvorgangs beim Einparken der rückwärtige Fahrzeugbereich mittels Abstandssensoren überwacht und das Fahrzeug automatisch gebremst wird, wenn ein Hindernis im rückwärtigen Fahrzeugbereich auftaucht.

Vollständigkeitshalber sei darauf hingewiesen, dass das Verfahren auch zum quer bzw. schräg Einparken eingesetzt werden kann, sofern im fünften Kurvenabschnitts der Lenkwinkel Null eingesteuert wird, das heißt eine Gerade gefahren wird.

Das Verfahren ist sowohl für Einparkvorgänge auf der linken oder rechten Straßenseite geeignet. Die Kurvenabschnitte sind dann jeweils lediglich gespiegelt.

Die jeweiligen Längen der Kurvenabschnitte hängen von der Fahrzeuggeometrie und der Fahrzeugkinematik, der Parklückengeometrie und der Startstellung des Fahrzeugs zu Beginn des Einparkvorgangs ab und werden zu Beginn des Einparkvorgangs bestimmt.

Ist die Parklücke zu kurz, um in einem "Zug" parallel zur Fahrbahn zu stehen zu kommen, kann der fünfte Kurvenabschnitt entsprechend verkürzt zurück gefahren werden und das schräg stehende Fahrzeug durch Rangieren parallel zum Fahrbahnrand zum Stehen gebracht werden. Vorzugsweise wird das Lenkrad während des Einparkvorgangs automatisch durch die Einparksteuerung gedreht.

Mittels üblichen Abstandssensoren, wie zum Beispiel Ultraschall-, Radar-Lasersensoren kann zumindest während des Durchfahrens des fünften Kurvenabschnitts die Annäherung an das hintere Parklückenende überwacht und gegebenenfalls die Länge des fünften Kurvenabschnitts während des Rückwärtsfahrens korrigiert werden. Dadurch wird verhindert, dass das Fahrzeug bei Messfehlern beim Ausmessen der Parklücke auf das hintere Fahrzeug auffährt. Ferner kann mit einer Abstandssensorik während des gesamten Einparkvorgangs der rückwärtige Fahrzeugbereich überwacht werden und das Fahrzeug automatisch gebremst werden, wenn ein Hindernis, zum Beispiel ein Fußgänger im rückwärtigen Fahrzeugbereich auftaucht. Der automatische Einparkvorgang wird dadurch jedoch nicht abgebrochen.

Vor der Durchführung des eigentlichen Einparkvorgangs wird zunächst mit dem Fahrzeug an der Parklücke seitlich vorbeigefahren und die Parklücke durch eine geeignete Sensorik ausgemessen. Gleichzeitig wird die momentane Fahrzeugposition und Fahrzeugstellung relativ zur Parklücke erfasst. Die "Abtastung" der Parklücke durch die Fahrzeugsensorik kann entweder explizit vom Fahrer aktiviert werden oder während der gesamten Fahrt aktiv sein. Im letztgenannten Fall kann der "Abtastmodus" auch in Abhängigkeit von vorgegebenen Geschwindigkeitsgrenzen, zum Bespiel nur bei Geschwindigkeit unterhalb einer vorgegebenen Maximalgeschwindigkeit aktiviert werden. Nach Erkennen einer hinreichend großen Parklücke wird dies dem Fahrer optisch, zum Beispiel im Cockpit oder akustisch mitgeteilt. Der Fahrer muss anschließend, wenn sich das Fahrzeug im Stillstand befindet, den Einparkvorgang aktiv starten. Hierzu kann beispielsweise ein Taster oder Schalter im Bereich des Schalthebels oder der Mittelkonsole vorgesehen sein. Alternativ dazu könnte der Einparkvorgang auch durch manuelles Einlegen des Rückwärtsganges durch den Fahrer gestartet werden. Nach dem Start des Einparkvorganges übernimmt die Einparkelektronik die Steuerung der Lenkung. Bei Fahrzeugen mit herkömmlicher Lenkung kann dies beispielsweise über einen Stellmotor, der an der Lenksäule angreift, erfolgen. Bei Einzelradlenkungen werden die zu lenkenden Räder individuell durch die Lenkelektronik angesteuert.

Vorzugsweise ist vorgesehen, dass der Fahrer das Fahrzeug aktiv in Bewegung setzen muss, um den Einparkvorgang zu starten. Bei Fahrzegen mit Automatikgetriebe kann dies durch Einlegen des Rückwärtsganges und durch Lösen der Bremse erfolgen. Das Fahrzeug "kriecht" dann automatisch in die Parklücke. Jedoch kann der Fahrer das Fahrzeug jederzeit durch Betätigen der Bremse anhalten. Durch erneutes Anfahren wird dann der Einparkvorgang fortgesetzt. Ein analoges Vorgehen ist auch bei Fahrzeugen mit Handschaltgetrieben oder automatisierten manuellen Schaltgetrieben möglich. Auch hier kann vorgesehen sein, dass der Fahrer selbst anfahren und die gewünschte Geschwindigkeit vorgeben muss.

Aus Sicherheitsgründen kann vorgesehen sein, dass die Geschwindigkeit des Fahrzeugs während des Einparkvorgangs auf eine vorgegebene Maximalgeschwindigkeit begrenzt ist. Ferner kann vorgesehen sein, dass die Maximalgeschwindigkeit während des Einparkvorgangs in Abhängigkeit von der momentan zu erwartenden Lenkwinkeländerungsgeschwindigkeit vorgegeben ist. Dies hat den Vorteil, dass die Anforderungen an die Lenkgeschwindigkeit reduziert werden und ein kostengünstiger Lenkwinkelaktuator zum Einsatz kommen kann, der wenig Bauraum beansprucht.

Sofern bei Erreichen der Parklücke ein weiteres Rangieren erforderlich ist, kann dem Fahrer die erforderliche Fahrtrichtung, zum Beispiel optisch oder akustisch angezeigt werden. Der Fahrer muss dann den entsprechenden Gang bzw. die entsprechende Wählhebelstellung einlegen und wird über die zu erwartenden Fahrzeugbewegung informiert. Das Anfahren erfolgt wieder aktiv durch den Fahrer. Das Abbremsen des Fahrzeugs bis zum Stillstand am Ende des Parkvorganges oder bei Erreichen eines Rangierumkehrpunktes kann entweder automatisch durch das System erfolgen oder in Verbindung mit einer optischen und/oder akustischen und/oder haptischen Information dem Fahrer mitgeteilt werden.

Alternativ dazu kann auch die Längssteuerung des Fahrzeugs vollständig durch das Parkassistenzsystem erfolgen. Der Einparkvorgang wird dann durch die Betätigung eines Tasters gestartet. Dieser muss während des gesamten Einparkvorgangs gedrückt gehalten werden. Das Fahrzeug fährt dann selbstständig an. Beim Loslassen des Tasters wird der Einparkvorgang unterbrochen und das Fahrzeug angehalten. Der Fahrer sollte dennoch die Bedienung des Getriebewählhebels zur Auswahl der Fahrtrichtung selbst übernehmen, damit dieser über die zu erwartende Bewegungsrichtung informiert ist.

Im folgenden wir die Erfindung im Zusammenhang mit der Zeichnung näher erläutert.
- Figur 1: zeigt den in der Praxis nur selten auftretenden Spezialfall, dass das Fahrzeug in der Startstellung parallel zur Längsrichtung der Parklücke ist (nicht Bestandteil der Erfindung);
- Figur 2, 3: zeigen Startstellungen, bei denen das Fahrzeug schräg zur Längsrichtung der Parklücke steht.

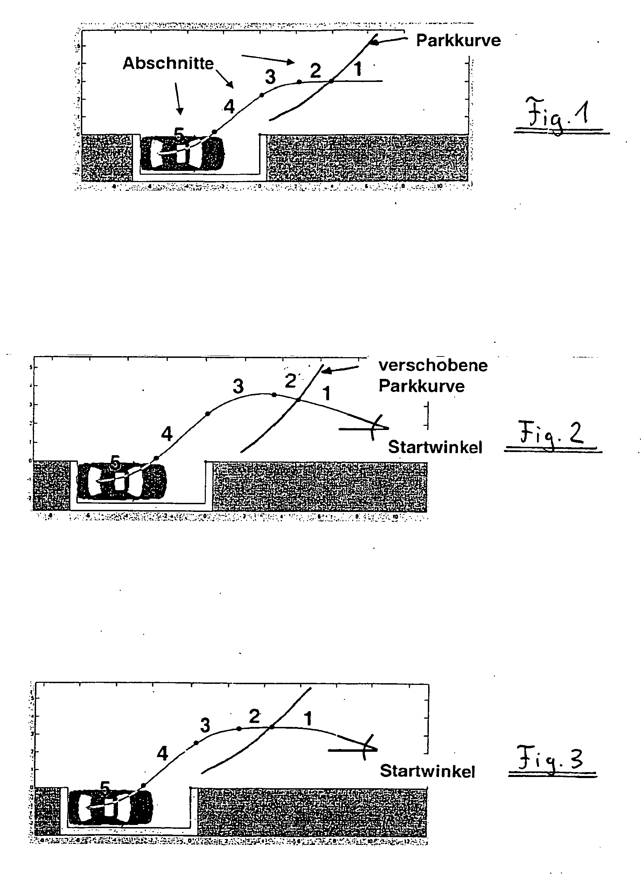

Bei dem in Figur 1 dargestellten Einparkvorgang steht das Fahrzeug in der Startstellung parallel zur Längsrichtung der Parklücke. Im Kurvenabschnitt 1 wird das Fahrzeug gerade nach hinten gefahren. Die Lenkung hat hier einen Lenkwinkel Null. Bei Erreichen einer Fahrzeugstellung, in der eine rechnerisch ermittelte, fiktive Parkkurve geschnitten wird, beginnt der eigentliche Lenkvorgang. Der zweite Kurvenabschnitt ist ein Klothoidenabschnitt. Der Kurvenabschnitt 3 ein Kreisbogen. Der Kurvenabschnitt 4 wieder ein Klothoidenabschnitt und der Kurvenabschnitt 5 ein Kreisbogen.

Üblicherweise treten in der Praxis Startstellungen auf, bei denen das Fahrzeug schräg bzw. nicht ganz parallel zur Längsrichtung der Parklücke steht. Dies ist in den **Figuren 2 und 3** dargestellt.

Beim Einparkvorgang der **Figur 2** wird ausgehend von der Startstellung das Fahrzeug während des Kurvenabschnitts 1 zurückgefahren. Hieran schließt sich ein Klothoidenabschnitt 2 an. Der Kurvenabschnitt 3 ist ein Kreisbogen. Der Kurvenabschnitt 4 wieder ein Klothoidenabschnitt. Der Kurvenabschnitt 5 ein Kreisbogen.

Ausgehend von einer schrägen Ausgangsstellung Kann das Fahrzeug zunächst entlang eines ersten Kurvenabschnitts zurückgefahren werden, der durch eine erste Klothoide gebildet ist. Hieran schließt sich der zweite Kurvenabschnitt an, der ebenfalls eine Klothoide ist, die aber durch eine andere Klothoidenfunktion beschrieben wird. Der Kurvenabschnitt 3 wiederum ist ein Kreisbogenabschnitt, der Kurvenabschnitt 4 ein weiterer Klothoidenabschnitt und der Kurvenabschnitt ein Kreisbogenabschnitt.

## Patentansprüche

1. Verfahren zum Lenken eines rückwärts in eine Parklücke einzuparkenden Fahrzeugs, wobei
ausgehend von einer Startstellung außerhalb der Parklücke bis zum Erreichen einer Parkstellung in der Parklücke nacheinander fünf jeweils knickfrei ineinander übergehende Kurvenabschnitte rückwärts durchfahren werden,
wobei
das Fahrzeug in zunächst in eine die Startstellung bildende Stellung schräg vorderhalb der Parklücke gebracht wird, in der das Fahrzeug schräg zu einer Längsrichtung der Parklücke steht,
dass es sich bei den in Fahrtrichtung gesehen letzten vier Kurvenabschnitten um folgende Kurventypen handelt:
- beim zweiten Kurvenabschnitt um einen Klothoidenabschnitt,
- beim dritten Kurvenabschnitt um einen Kreisbogenabschnitt,
- beim vierten Kurvenabschnitt um einen weiteren Klothoidenabschnitt und
- beim fünften Kurvenabschnitt, auf dem das Fahrzeug in die Parkstellung parallel zur Längsrichtung der Parklücke gebracht wird, um einen weiteren Kreisbogenabschnitt, und
dass ausgehend von der Startstellung des Fahrzeugs die gesamte rückwärts bis zum Erreichen der Parkstellung zu durchfahrende Bahn ermittelt und die Lenkung beim Rückwärtsfahren des Fahrzeugs von einer Steuerelektronik entsprechend dieser Bahn gesteuert wird, und
dass der zwischen der Startstellung und dem Beginn des zweiten Kurvenabschnitts liegende erste rückwärts durchfahrene Kurvenabschnitt durch eine andere geometrische Funktion beschrieben ist als der zweite Kurvenabschnitt, wobei der erste Kurvenabschnitt ein Klothoidenabschnitt ist.

2. Verfahren nach Anspruch 1, wobei es sich bei Lenkwinkeländerungen, die auf der Bahn zwischen der Startstellung und der Parkstellung eingesteuert werden, ausschließlich um sprungfreie, kontinuierliche Lenkwinkeländerungen handelt, so dass das Fahrzeug die gesamte Bahn zwischen der Startstellung und der Parkstellung ohne anzuhalten durchfahren kann.

3. Verfahren nach Anspruch 1 oder 2, wobei die Einparksteuerung vom Fahrer nur dann aktivierbar ist, wenn das Fahrzeug stillsteht, wobei die momentane Fahrzeugposition und die momentane Fahrzeugstellung relativ zur Parklücke als Startstellung definiert wird.

4. Verfahren nach einem der Ansprüche 1 bis 3, wobei das Fahrzeug zum Einparken vom Fahrer in Bewegung gesetzt werden muss und die Fahrzeuggeschwindigkeit während des gesamten Einparkvorganges durch den Fahrer vorgegeben wird.

5. Verfahren nach einem der Ansprüche 1 bis 4, wobei eine vom Fahrer vorgegebene Geschwindigkeit auf eine vorgegebene Maximalgeschwindigkeit begrenzt wird.

6. Verfahren nach einem der Ansprüche 1 bis 5, wobei der von der Steuerelektronik ermittelte Lenkwinkel bezogen auf den rückwärts gefahrenen Weg und somit geschwindigkeitsunabhängig ermittelt wird.

7. Verfahren nach einem der Ansprüche 1 bis 6, wobei das Fahrzeug während und am Ende des Einparkvorganges durch den Fahrer gebremst wird.

8. Verfahren nach einem der Ansprüche 1 bis 7, wobei das Fahrzeug zum Erreichen der Startstellung für das Rückwärtsfahren zunächst vorwärts seitlich an der Parklücke vorbeigefahren wird und beim Vorbeifahren die Parklückengeometrie mittels Abstandssensoren abgetastet und in der Steuerelektronik gespeichert wird.

9. Verfahren nach einem der Ansprüche 1 bis 8, wobei während Rückfahrvorganges beim Einparken der rückwärtige Fahrzeugbereich mittels Abstandssensoren überwacht und das Fahrzeug automatisch gebremst wird, wenn ein Hindernis im rückwärtigen Fahrzeugbereich auftaucht.

10. Verfahren nach einem der Ansprüche 1 bis 9, wobei der Mittelpunkt der Hinterachse des Fahrzeugs die fünf Kurvenabschnitte beschreibt.

## Claims

1. A method of steering a vehicle for reversing into a parking gap, wherein starting from a starting position outside the gap and until reaching a parking position in the gap, five bend portions merging into one another without a break are reversed through, wherein
the vehicle is moved at an angle in front of the gap into a position initially constituting the starting position, in which the vehicle is at an angle to a longitudinal direction of the gap,
the last four bend portions considered in the direction of travel are of the following types:
- the second portion is a clothoid portion,
- the third portion is a circular arc portion,
- the fourth portion is another clothoid portion and
- the fifth portion, when the vehicle is brought into the parking position parallel to the longitudinal direction of the gap, is another circular arc portion and,
starting from the starting position of the vehicle, the entire track for reversing through until reaching the parking position is determined and the steering, during reversing of the vehicle, is controlled by an electronic unit in accordance with the track, and
the first bend portion for reversing through between the starting position and the beginning of the second bend portion is described by a different geometrical function from the second portion, wherein the first portion is a clothoid portion.

2. A method according to claim 1, wherein changes in the steering angle set along the track between the starting position and the parking position are all continuous without jumps, so that the vehicle can travel along the entire track between the starting position and the parking position without stopping.

3. A method according to claim 1 or claim 2, wherein the parking control is activatable by the driver only when the vehicle is stationary, wherein the instantaneous position of the vehicle and the instantaneous position thereof relative to the parking gap are defined as the starting position.

4. A method according to any of claims 1 to 3, wherein the vehicle for parking has to be set in motion by the driver and the speed of the vehicle is set by the driver during the entire parking operation.

5. A method according to any of claims 1 to 4, wherein a speed set by the driver is limited to a set maximum speed.

6. A method according to any of claims 1 to 5, wherein the steering angle determined by the electronic control unit is determined relative to the distance reversed through, i.e. independently of the speed.

7. A method according to any of claims 1 to 6, wherein the vehicle is braked by the driver during and at the end of the parking process.

8. A method according to any of claims 1 to 7, wherein in order to reach the starting position for reversing, the vehicle is first moved forwards alongside the gap and during the forward travel the shape of the gap is scanned by distance sensors and stored in the electronic control unit.

9. A method according to any of claims 1 to 8, wherein during the reversing process when parking, the rear region of the vehicle is monitored by distance sensors and the vehicle is automatically braked if an obstacle appears in the rear region of the vehicle.

10. A method according to any of claims 1 to 9, wherein the centre point of the rear axle of the vehicle describes the five bend portions.

## Revendications

1. Procédé pour guider la marche arrière d'un véhicule à ranger dans un emplacement de stationnement, selon lequel
partant d'une position de départ à l'extérieur de l'emplacement de stationnement et jusqu'à atteindre la position de stationnement dans l'emplacement de stationnement, on exécute successivement cinq segments de courbes qui se rejoignent sans inflexion,
le véhicule étant tout d'abord mis dans une position inclinée devant l'emplacement de stationnement et constituant la position de départ dans laquelle le véhicule est dirigé en biais par rapport à la direction longitudinale de l'emplacement de stationnement,
les quatre derniers segments de courbes vus dans la direction de déplacement correspondent aux types de courbes suivants :
- le second segment de courbe est un segment de clothoïde,
- le troisième segment de courbe est un segment d'arc de cercle,
- le quatrième segment de courbe est un autre segment de clothoïde et
- le cinquième segment de courbe suivant lequel le véhicule est engagé dans la position de stationnement parallèlement à la direction longitudinale de l'emplacement de stationnement est un autre segment d'arc de cercle et
on détermine la trajectoire à parcourir à partir de la position de départ du véhicule pour l'ensemble de la marche arrière jusqu'à arriver dans la position de stationnement et le guidage pour la marche arrière du véhicule est commandé par une électronique de commande en fonction de cette trajectoire et
le premier segment de courbe à parcourir en marche arrière entre la position de départ au début du second segment de courbe est décrit par une autre fonction géométrique que le second segment de courbe,
le premier segment de courbe étant un segment de clothoïde.

2. Procédé selon la revendication 1, selon lequel les variations d'angle de braquage commandées sur la trajectoire entre la position de départ et la position de stationnement sont exclusivement des variations d'angle de braquage continues sans variation brusque de sorte que le véhicule parcourt toute la trajectoire sans s'arrêter, entre la position de départ et la position de stationnement.

3. Procédé selon la revendication 1 ou 2, selon lequel la commande de la manoeuvre de stationnement est activée par le conducteur seulement lorsque le véhicule est à l'arrêt et on définit la position instantanée du véhicule et la position instantanée du véhicule par rapport à l'emplacement de stationnement comme position de départ.

4. Procédé selon l'une des revendications 1 à 3, selon lequel le véhicule doit être mis en mouvement par le conducteur pour la manoeuvre de rangement et pendant toute la manoeuvre de rangement la vitesse est prédéfinie par le conducteur.

5. Procédé selon l'une des revendications 1 à 4, selon lequel la vitesse prédéfinie par le conducteur est limitée à une vitesse maximale prédéterminée.

6. Procédé selon l'une des revendications 1 à 5, selon lequel on détermine l'angle de braquage défini par l'électronique de commande, rapporté au trajet parcouru en marche arrière et ainsi indépendant de la vitesse.

7. Procédé selon l'une des revendications 1 à 6, selon lequel le véhicule est freiné au cours de la manoeuvre de rangement et jusqu'à la fin de la manoeuvre.

8. Procédé selon l'une des revendications 1 à 7, selon lequel jusqu'à atteindre la position de départ pour la marche arrière, le véhicule passe tout d'abord en marche avant à côté de l'emplacement de stationnement et lors de ce passage des capteurs de distance déterminent la géométrie de l'emplacement de stationnement et l'enregistrent dans l'électronique de commande.

9. Procédé selon l'une des revendications 1 à 8, selon lequel au cours de la marche arrière, lors de la manoeuvre de stationnement, la zone à l'arrière du véhicule est détectée par des capteurs de distance et le véhicule est freiné automatiquement si un obstacle apparaît dans la zone derrière le véhicule.

10. Procédé selon l'une des revendications 1 à 9, selon lequel le centre de l'essieu arrière du véhicule décrit les cinq segments de courbes.
